# EUROPÄISCHE PATENTSCHRIFT

(11) **EP 1 542 781 B1**
(45) Veröffentlichungstag und Bekanntmachung des Hinweises auf die Patenterteilung: **28.02.2007**
(21) Anmeldenummer: 03797157.9
(22) Anmeldetag: 11.06.2003
(51) Int. Cl.: B01D 35/143, G01B 17/02

(54) **VORRICHTUNG UND VERFAHREN ZUR BESTIMMUNG DES ZUSTANDS EINES PARTIKELFILTERS**
DEVICE AND METHOD FOR DETERMINING THE STATE OF A PARTICLE FILTER
DISPOSITIF ET PROCEDE POUR DETERMINER L'ETAT D'UN FILTRE A PARTICULES

(30) Priorität: 12.09.2002 DE 10242300
(43) Veröffentlichungstag der Anmeldung: 22.06.2005
(73) Patentinhaber: ROBERT BOSCH GMBH, 70442 Stuttgart (DE)
(72) Erfinder: BREUER, Norbert, 71254 Ditzingen (DE)
(86) Internationale Anmeldenummer: PCT/DE2003/001934
(87) Internationale Veröffentlichungsnummer: WO 2004/026434

(56) Entgegenhaltungen:
- WO-A-01/43847
- WO-A-99/16538
- WO-A-03/013707
- GB-A- 2 017 916
- US-B1- 6 269 684
- TAKAHASHI K ET AL: "MEASUREMENT OF CAKE THICKNESS ON MEMBRANE FOR MICROFILTRATION OF YEAST USING ULTRASONIC POLYMER CONCAVE TRANSDUCER" JOURNAL OF CHEMICAL ENGINEERING OF JAPAN, SOCIETY OF CHEMICAL ENGINEERS. TOKYO, JP, Bd. 24, Nr. 5, 1. Oktober 1991 (1991-10-01), Seiten 599-603, XP000241639 ISSN: 0021-9592

## Beschreibung

Die Erfindung betrifft eine Vorrichtung zur Bestimmung des Zustands eines Partikelfilters mit den im Oberbegriff des Patentanspruchs 1 genannten Merkmalen und ein Verfahren zur Bestimmung des Zustands eines Partikelfilters mit den im Oberbegriff des Patentanspruchs 8 genannten Merkmalen.

### Stand der Technik

Insbesondere bei Dieselmotoren ist der Zusammenhang zwischen der Entstehung von Stickoxiden und Partikeln sowie dem Treibstoffverbrauch ein besonders schwieriger, denn Maßnahmen zur die Stickoxidverringerung bewirkten einen Anstieg der Partikelemissionen und des Treibstnffverbrauchs. Da die Partikelemission nicht gänzlich vermieden werden kann, sind geeignete Maßnahmen zu ergreifen.

Zur Einhaltung strengerer Abgasgrenzwerte können Partikelfilter (DPF) im Kraftfahrzeug (KFZ) einen wichtigen Beitrag liefern. Diese filtern mit einem hohen Wirkungsgrad Partikel aus dem Abgasstrom heraus.

Partikel und Dieselpartikel im Besonderen sind zum Teil Agglomerate von Primärpartikeln aus Kohlenwasserstoffverbindungen. Zum Teil bestehen sie ausreinem Kohlenstoff. Sie entstehen durch unvollständige Verbrennung im Brennraum und weisen eine Größe von 50 bis 200 nm auf. Normalerweise sind sie von unregelmäßiger geometrischer Gestalt. Menge und Zusammensetzung der Partikel sind stark von den Motorlastverhältnissen, vom Einspritzsystem und von der chemischen Zusammensetzung des Treibstoffs abhängig.

Durch die abgelagerten Feststoffe wird die Permeabilität des Filters verringert, wodurch der Abgasgegendruck steigt, was wiederum zu Leistungseinbu-βen des Motors bzw. zur Verbrauchserhöhung führt. Die Filter werden deshalb bei Erreichen eines gewissen Füllstands regeneriert. Hierbei wird durch eine Temperaturerhöhung der größte Teil der Partikelfracht, der oxidierbar ist, in gasförmiges Kohlendioxid CO2 und Kohlenmonoxid CO überführt und somit aus dem Filter entfernt. Nach erfolgreicher Regeneration nimmt der Abgasgegendruck wieder einen wesentlich geringeren Ausgangswert an.

Die Bestimmung der abgeschiedenen Masse an Partikeln im Filter kann im KFZ nicht direkt erfolgen. Statt dessen werden alternative Wege beschritten, um den optimalen Zeitpunkt zur Einleitung von Regenerationsmaßnahmen zu ermitteln.

Bekannt ist der Einsatz eines Differenzdrucksensors, welcher den Druckabfall über dem Filterkörper ermittelt. Der Differenzdruck und damit der Druckabfall werden jedoch sowohl durch die Filterpermeabilität als auch durch den volumenstrom am Filter bestimmt. Der Volumenstrom hängt seinerseits von den Betriebsbedingungen des Motors und der Abgastemperatur am Filterkörper ab, so dass sich eine große Querempfindlichkeit zu verschiedenen Einflussparametern ergibt. Bei der üblichen Verwendung von keramischen Wandstromfiltern mit parallel geschalteten Kanälen ergibt sich der Strömungswiderstand als Parallelschaltung über alle Filterkanäle und den darauf befindlichen Flächenelementen. Wird ein genügend großer Teil dieser Flächenelemente durch die Regeneration gereinigt, so senkt sich der Strömungswiderstand so weit ab, dass ein Steuergerät, welches die Regeneration überwacht, irrtümlich von der Vollständigkeit der Regeneration ausgehen könnte und die Maßnahme zur Temperaturerhöhung und damit die Partikeloxidation beendet. Hierdurch kann es zu unerwünschten Akkumulationen von brennbarem Material in Teilbereichen des DPF kommen.

Eine weitere Möglichkeit zur Ermittlung des Beladungszustands des DPF besteht darin, mit Hilfe von Kennfelddaten die aus dem Motor emittierte Partikelmasse durch zeitliche Integration über die angefahrenen Betriebspunkte zu berechnen. Dieses Verfahren besitzt insbesondere bei dynamischen Fahrbedingungen und durch die Gefahr einer fehlerbedingten Änderung der Partikelemission eine sehr große Unsicherheit. Es kann zur Plausibilitätsprüfung für andere Messverfahren mit berücksichtigt werden.

Zur Umgehung dieser Unsicherheit in der berechneten Partikelemission besteht eine weitere Möglichkeit darin, die Partikelkonzentration vor dem DPF mit Hilfe eines Sensors zu messen.

Bedingt durch teilweise erhebliche technische Schwierigkeiten konnte sich bisher keines der Prinzipien bis zur Marktreife durchsetzen.

Wie bereits erwähnt, ist der Sensor nur ein Hilfsmittel, um den Füllstand des DPF durch Integration der vom Motor erzeugten Partikelmenge abzuschätzen. Eine Unsicherheit in der Bestimmung des Füllstands entsteht durch das Regenerationsverfahren an sich. Da die Erhöhung der Temperatur einen erheblichen Eingriff in das Motormanagement darstellt, sollte diese Maßnahme so selten und so kurz wie möglich durchgeführt werden. Hierdurch kann in der Praxis das Problem auftreten, dass der DPF nicht vollständig regeneriert und Bereiche im Filter mit einer teilweisen Restbeladung bestehen bleiben. Akkumuliert sich während der folgenden Beladungsphase weiterhin Partikelmasse in diesem Bereich, so kann lokal eine kritische Beladungskonzentration auftreten, welche bei nachfolgenden Regenerationszyklen zur Überhitzung dieser Areale führt. Hierdurch können Filterstrukturen irreversibel beschädigt werden.

Der Aufsatz aus dem Journal of Chemical Engineering of Japan (Takahashi et al., "Measurement of cake thickness on membrane for microfiltration of yeast using ultrasonic polymer concave transducer") der "Society of chemical engineers", Tokio, JP, Bd. 24, Nr. 5. 1. Oktober 1991 (1991-10-O1), Seiten 599-603, beschreibt eine Ultraschalluntersuchung in einer Flüssigkeit, um auf eine Hefefilterkuchendicke zu schließen.

Die GB 201 79 16 beschreibt eine Vorrichtung und ein Verfahren zur Bestimmung der Dicke eines Filterkuchens, bei der bzw. bei dem ein Schallpuls ausgesendet und die Laufzeit der Oberflächenreflektion ausgewertet wird.

Die WO 014 38 47 erwähnt die Verwendung eines Schallsensors bei einer Anordnung zum Filtern von Kunststoffschmelzen.

Die US 62 69 684 beschreibt ein Verfahren zur Vermessung eines Filterkuchenaufbaus unter Verwendung sich in einer Flüssigkeit ausbreitender Schallwellen.

Die WO 99 16 53 8 beschreibt ein Verfahren zur Erkennung von Filterdefekten unter Verwendung von Schall, wobei defekte Elemente durch von diesen Elementen entspringenden Schallwellen erkannt werden können.

### Vorteile der Erfindung

Die erfindungsgemäße Vorrichtung und das erfindungsgemäße Verfahren haben den Vorteil, dass damit
bereits während der Regenerationsphase der Zustand des Partikelfilters und damit , neben dem Füllstand und der Permeabilität auch dessen Regenerationsgrad zuverlässig bestimmt werden können.

Die erfindungsgemäße Vorrichtung zur Bestimmung des Zustands eines Partikelfilters weist eine Schallquelle zum Aussenden eines Schallsignals in Richtung des Partikelfilters und einen Schallempfänger zum Empfangen des vom Partikelfilter veränderten Schallsignals auf. Dabei wird der Motor des KFZ in vorteilhafter Weise als Schallquelle benutzt und es reduziert sich die Anzahl der im Abgastrakt einzubauenden Komponenten. Zusätzlich ist eine Steuer- und Auswerteeinheit zum Auswerten des empfangenen Schallsignals vorgesehen.

Das erfindungsgemäße Verfahren zur Bestimmung des Zustands eines Partikelfilters weist folgende Schritte auf. Mittels einer Schallquelle wird ein Schallsignal in Richtung des Partikelfilters gesandt. Mittels eines Schallempfängers wird das durch den Partikelfilter veränderte Schallsignal empfangen und mittels einer Auswerteeinheit daraus der Zustand des Partikelfilters bestimmt.

Weitere vorteilhafte Ausgestaltungen der Erfindung ergeben sich aus den in den abhängigen Patentansprüchen angegebenen Merkmalen.

In einer weiteren Ausführungsform der Erfindung ist die Schallquelle derart ausgebildet, dass das erzeugte Schallsignal im Ultraschallbereich liegt. Damit lässt sich die räumliche Auflösung verbessern.

Der Schallempfänger der erfindungsgemäßen Vorrichtung ist vorteilhafterweise ein Mikrofon.

In einer Weiterbildung der Erfindung ist die Schallquelle auf der einen Seite des Partikelfilters und der Schallempfänger auf der anderen Seite des Partikelfilters angeordnet_

Es ist auch möglich, dass die Schallquelle und der Schallempfänger auf einer Seite des Partikelfilters angeordnet sind. Damit lassen sich die vom Partikelfilter reflektierten veränderten Schallwellen auswerten.

Zudem kann bei der erfindungsgemäßen Vorrichtung ein weiterer Schallempfänger vorgesehen sein, wobei der eine Schallempfänger auf der einen Seite des Partikelfilters und der andere Schallempfänger auf der anderen Seite des Partikelfilters angeordnet ist.

In einer weiteren Ausführungsform der erfindungsgemäßen Vorrichtung ist die Auswerteeinheit derart ausgebildet, dass sie die Amplitude auszuwerten und/oder die Phasenlage der beiden Schallsignale miteinander vergleichen kann.

Bei einer Weiterbildung des erfindungsgemäßen Verfahrens werden die Phase und/oder die Amplitude des empfangenen Schallsignals ausgewertet.

Vorteilhafterweise wird von der Schallquelle ein sinus- oder impulsförmiges Schallsignal erzeugt.

Zudem ist es von Vorteil, anhand des ausgesendeten und des empfangenen Schallsignals die Umgebungstemperatur zu bestimmen. Die Kenntnis über die Umgebungstemperatur und damit die Abgastemperatur ist hilfreich, um die Regenerierung des Partikelfilters zu kontrollieren.

### Zeichnungen

Die Erfindung wird im Folgenden in mehreren Ausführungsbeispielen anhand von drei Figuren näher erläutert.
- Figur 1: zeigt eine prinzipielle Darstellung einer ersten Ausführungsform der Erfindung im Querschnitt.
- Figur 2: zeigt den zeitlichen Verlauf eines ausgesendeten und des empfangenen Schallsignals.
- Figur 3: zeigt eine prinzipielle Darstellung einer zweiten Ausführungsform der Erfindung im Querschnitt.

Die Erfindung nutzt den Effekt, dass poröse Materialien gegenüber Schall eine Impedanz aufweisen, welche von der Struktur des Materials abhängt. Somit besitzt ein beladener Filter, der beispielsweise zusätzlich ein Oberflächenfiltrat aufweist, eine andere Schallimpedanz als ein unbeladener Filter. Die Messung des Abgasgegendrucks stellt den Grenzfall für die Gleichstromimpedanz mit verschwindend geringer Frequenz dar.

Deshalb wird die Durchlässigkeit des Schalls und ggf. eine Änderung der Phase in Abhängigkeit von der Frequenz zunächst für unterschiedliche DPF-Beladungen bestimmt. Während des Betriebs wird die Schallimpedanz bestimmt und mit den vorher bestimmten Impedanzen verglichen. Hieraus ergibt sich der Beladungszustand des DPF. Gemäß einer Regenerationsstrategie kann dann eine geeignete Regenerationsmaßnahme beispielsweise bei Überschreiten eines gewissen Füllstands eingeleitet werden. Die Bestimmung der akustischen Impedanz kann im Fahrzeug auf verschiedene Arten erfolgen.

### Beschreibung des ersten Ausführungsbeispiels

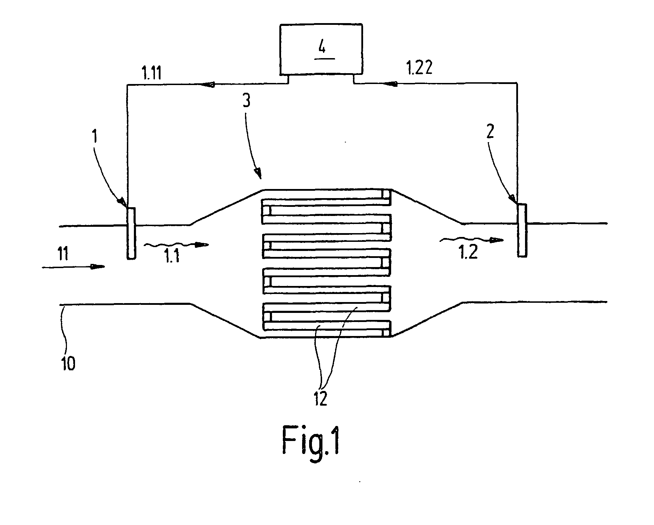

Bei der in Figur 1 gezeigten Ausführungsform der Erfindung ist in einem Abgasrohr 10 eine Schallquelle 1, auch als Schallgeber bezeichnet, in Strömungsrichtung 10 des Abgases vor dem DPF 3 und ein Schallempfänger 2 hinter dem DPF 3 angeordnet.

Die Schallquelle 1 erzeugt ein Schallwelle 1.1, die durch den Partikelfilter 3 modifiziert als Schallwelle 1.2 am Schallempfänger 2 ankommt und von diesem empfangen wird. Die durch den Schallempfänger 2 in ein elektrisches Signal 1.22 umgewandelte empfangene Schallwelle 1.2, wird von einer Auswerteeinheit 4 ausgewertet. Auf die Auswertung wird weiter unten noch näher eingegangen.

Die beiden Elemente Schallquelle 1 und Schallempfänger 2 können auch in umgekehrter Reihenfolge im Abgasrohr 10 eingebaut sein.

Der Schallempfänger 2 kann z.B. ein Mikrofon sein.

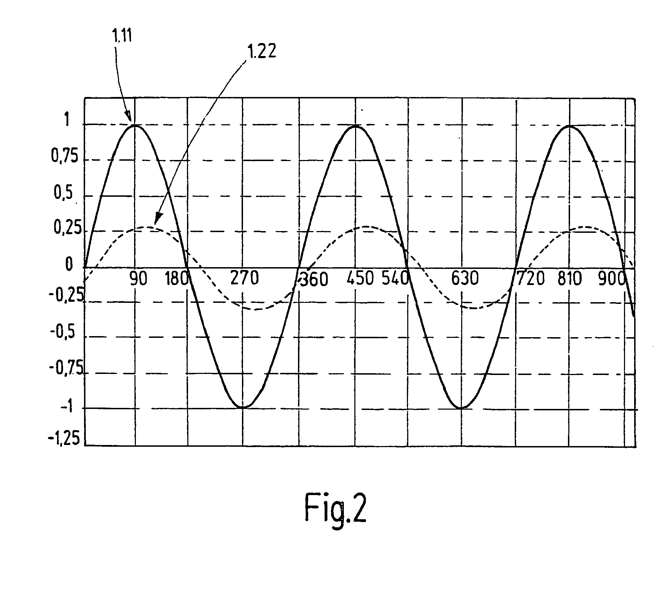

Die Schallwelle 1.1 wandert durch die Filterstruktur hindurch, wird in der Intensität abgeschwächt und in der Phase verschoben. In Figur 2 sind die entsprechenden Signalverläufe gezeigt. Auf der y-Achse ist die Amplitude und auf der x-Achse die Zeit aufgetragen.

Bei Kenntnis des anregenden Signals 1.11 und des ankommenden Signals 1.22 können die beiden Größen Phasenverschiebung und Intensitätsabnahme bestimmt werden.

Als anregendes Signal 1.11 kann beispielsweise ein Sinussignal verwendet werden, welches die frequenzaufgelöste Auswertung erheblich vereinfacht. Andere Signalformen sind ebenfalls möglich und können mittels Fourieranalyse in die Frequenzkomponenten zerlegt werden. Es kann auch direkt die Signaltransmission eines beispielsweise kurzen Schallimpulses ausgewertet werden. Durch die Wahl der Signalformen und dem Vermessen des Grundsignals ohne aktiven Schallgeber 1, kann das Hintergrundsignal, welches beispielsweise durch den Motor verursacht wird, ermittelt und bei der Auswertung berücksichtigt werden.

Durch die Auswertung der Impedanz bei verschiedenen Frequenzen ist es möglich, Einblicke in die räumliche Verteilung der Partikelablagerungen im DPF 3 zu bekommen. Grundsätzlich ist es so möglich, Unterschiede zwischen Ablagerungen, welche sich am vorderen bzw. hinteren Ende des DPF 3 befinden, zu unterscheiden.

Die erreichbare räumliche Auflösung wird wesentlich durch die verwendete Wellenlänge bzw. die Frequenz bestimmt. Zur Erreichung einer örtlichen Auflösung in der Größenordnung des Partikelfilters werden Frequenzen oberhalb von 500 Hz oder noch besser oberhalb von 2 kHz verwendet. Ist nur die Gesamtpermeabilität des Partikelfilters 3 interessant, können auch niedrigere Frequenzen verwendet werden.

Für zeitliche Impulse ergibt sich entsprechend eine maximale Impulslänge im ms Bereich.

Durch die Verwendung von Ultraschall kann die Auflösung erheblich verbessert werden.

Im allgemeinen ist die radiale Verteilung der Partikel über die parallel geschalteten Kanäle 12 des Partikelfilters 3 homogen. Nähere Informationen über eine möglicherweise inhomogene Verteilung in radialer Richtung können durch die Verwendung mehrerer Schallgeber und/oder Schallempfänger gewonnen werden. Im Bedarfsfall kann so eine kanalweise Analyse der DPF-Beladung erfolgen.

### Beschreibung des zweiten Ausführungsbeispiels

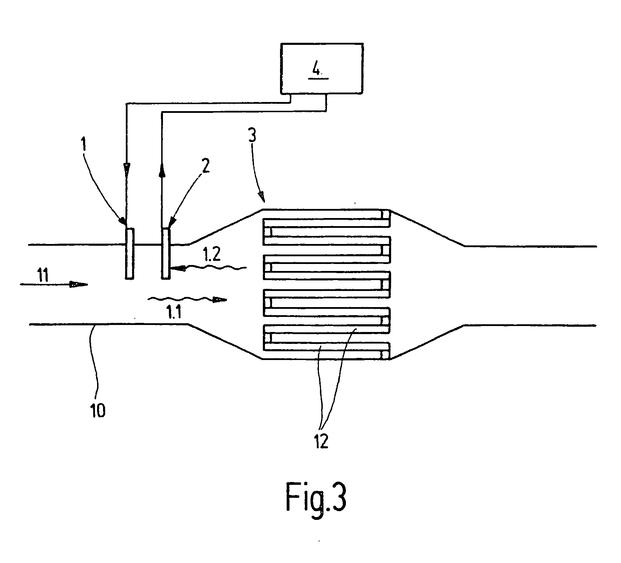

Anstelle der oben beschriebenen Anordnung von Schallquelle 1 und Schallempfänger 2 auf zwei Seiten des DPF 3 zur Transmission des Schalls, kann die Anordnung von Schallgeber 1 und Schallempfänger 2 auf einer Seite des DPF auch Werte für die Reflexion des Signals ergeben. Die entsprechende Anordnung ist in Figur 3 gezeigt. Dabei sind der Schallgeber 1 und der Schallempfänger 2 auf der aus Strömungsrichtung 11 des Abgases betrachtet vorderen Seite des Partikelfilters 3 im Abgasrohr 10 eingebaut. Diese Anordnung in Verbindung mit gepulsten Signalen entspricht der Arbeitsweise eines Echolots.

Die Signalauswertung erfolgt analog zu den oben beschriebenen Wegen.

Bei den beschriebenen Ausführungsformen wird in vorteilhafter Weise als Schallquelle 1 die Schallemission einer bereits vorhandenen Quelle, nämlich des Motors, verwendet. Hierbei werden vorteilhafterweise zwei Schallempfänger verwendet, von denen sich je einer vor und einer hinter dem DPF befindet. Durch die Korrelation zwischen einlaufendem und auslaufendem Schallsignal kann wiederum die Schalltransmission ermittelt werden. Die Fourieranalyse liefert die frequenzaufgelöste Impedanz, welche für die Auswertung des Beladungszustands besonders von Vorteil ist.

Wird das Motorgeräusch zeitlich aufgelöst aufgezeichnet und die Werte, welche vor und hinter dem DPF ermittelt werden, miteinander korreliert, so kann neben der Dämpfung auch die Signallaufzeit ermittelt werden. Analog kann die Signallaufzeit bei impulsartigen Schallanregung mit Hilfe eines Schallgebers und eines Schallempfängers bestimmt werden.

Bei bekannter räumlicher Anordnung beider Schallempfänger lässt sich aus der Signallaufzeit die Schallgeschwindigkeit bestimmen. Gleiches gilt bei bekannter räumliche Anordnung von Schallgeber und Schallempfänger. Die Schallgeschwindigkeit verändert sich mit der Wurzel aus der absoluten Gastemperatur, welche beispielsweise zur Kontrolle der DPF Regenerierung von Interesse ist. Durch die Mitbenutzung der erfindungsgemäß verwendeten Komponenten kann ein Temperatursensor eingespart werden bzw. andere Komponenten, wie z.B. ein vorgelagerter Oxidationskatalysator zur Temperaturanhebung, auf seine Funktionsfähigkeit überprüft werden.

Beschreibung eines vierten Ausführungsbeispiels In einer weiteren in den Figuren nicht dargestellten Ausführungsform werden von einem Schallgeber und/oder Schallempfänger verschiedene Positionen nacheinander durch eine Verschiebeeinrichtung angefahren und so eine höhere radiale Ortsauflösung erreicht.

Bei der Erfindung wird der innere Zustand des DPF direkt ermittelt. Die Querempfindlichkeit zum Volumenstrom, die bei der Differenzdruckmessung auftritt, wird erheblich verringert. Bei dem Verfahren und der Vorrichtung können kostengünstige Komponenten verwendet werden. Die Erfindung kann auch zur Erkennung von Filterdefekten eingesetzt werden.

Die akustischen Komponenten zur Untersuchung des DPF-Zustands können zudem gleichzeitig weitere Überwachungsfunktionen für den Abgasstrang übernehmen. Aus dem aufgezeichneten Spektrum des Motorgeräuschs in Abhängigkeit vom Betriebszustand kann auf einen Defekt im Abgasstrang, z.B. auf eine Leckage, oder auf einen Defekt des Motors geschlossen werden. Dies ist als unterstützende Diagnostik sinnvoll.

Anstelle eines Motors kann eine Pfeife oder ein Lautsprecher, beispielsweise ein Piezolautsprecher, als Schallquelle vorgesehen sein.

## Patentansprüche

1. Vorrichtung zur Bestimmung des Zustands eines Partikelfilters eines Kraftfahrzeugs, **dadurch gekennzeichnet, dass** eine Schallquelle (1) zum Aussenden eines Schallsignals (1.1) in Richtung des Partikelfilters (3) vorgesehen ist, dass ein Schallempfänger (2) zum Empfangen des vom Partikelfilter (3) veränderten Schallsignals (1.2) vorgesehen ist und dass eine mit dem Schallempfänger (2) verbundene Auswerteeinheit (4) zum Auswerten des empfangenen Schallsignals (1.2) vorgesehen ist, wobei die Auswerteeinheit eingerichtet ist zur Bestimmung der Schallimpedanz, und wobei die Schallquelle (1) der Motor des Kraftfahrzeugs ist.

2. Vorrichtung nach Patentanspruch 1, **dadurch gekennzeichnet, dass** die Schallquelle (1) derart ausgebildet ist, dass das erzeugbare Schallsignal (1.1) im Ultraschallbereich liegt.

3. Vorrichtung nach einem der Patentansprüche 1 bis 2, **dadurch gekennzeichnet, dass** der Schallempfänger (2) ein Mikrofon ist.

4. Vorrichtung nach einem der Patentansprüche 1 bis 3, **dadurch gekennzeichnet, dass** die Schallquelle (1) auf der einen Seite des Partikelfilters (3) und der Schallempfänger (2) auf der anderen Seite des Partikelfilters (3) angeordnet sind.

5. Vorrichtung nach einem der Patentansprüche 1 bis 3, **dadurch gekennzeichnet, dass** die Schallquelle (1) und der Schallempfänger (2) auf einer Seite des Partikelfilters (3) angeordnet sind.

6. Vorrichtung nach einem der Patentansprüche 1 bis 3, **dadurch gekennzeichnet, dass** ein weiterer Schallempfänger vorgesehen ist, der eine Schallempfänger (2) auf der einen Seite des Partikelfilters (3) und der weitere Schallempfänger auf der anderen Seite des Partikelfilters (3) angeordnet ist.

7. Vorrichtung nach einem der Patentansprüche 1 bis 4, **dadurch gekennzeichnet, dass** die Auswerteeinheit (4) derart ausgebildet ist, dass sie die Amplitude des Schallsignals (1.2) auswerten und/oder die Phasenlage der beiden Schallsignale (1.1, 1.2) miteinander vergleichen kann.

8. Verfahren zur Bestimmung des Zustands eines Partikelfilters eines Kraftfahrzeugs, **dadurch gekennzeichnet, dass** mittels einer Schallquelle (1) ein Schallsignal (1.1) in Richtung des Partikelfilters (3) gesandt wird, mittels eines Schallempfängers (2) das durch den Partikelfilter (3) veränderte Schallsignal (1.2) empfangen wird, und mittels einer Auswerteeinheit (4) die Schallimpedanz und daraus der Zustand des Partikelfilters (4) bestimmt wird, wobei als Schallquelle der Motor des Kraftfahrzeugs verwendet wird.

9. Verfahren nach Patentanspruch 8, **dadurch gekennzeichnet, dass** die Phase und/oder die Amplitude des empfangenen Schallsignals (1.2) ausgewertet werden.

10. Verfahren nach Patentanspruch 8 oder 9, **dadurch gekennzeichnet, dass** von der Schallquelle (1) ein sinus- oder impulsförmiges Schallsignal erzeugt wird.

11. Verfahren nach einem der Patentansprüche 8 bis 10, **dadurch gekennzeichnet, dass** anhand des ausgesendeten und des empfangenen Schallsignals (1.1, 1.2) die Umgebungstemperatur bestimmt wird.

## Claims

1. Device for determining the state of a particle filter of a motor vehicle, **characterized in that** a sound source (1) for emitting a sound signal (1.1) in the direction of the particle filter (3) is provided, **in that** a sound receiver (2) for receiving the sound signal (1.2) which is modified by the particle filter (3) is provided, and **in that** an evaluation unit (4) which is connected to the sound receiver (2) is provided for evaluating the received sound signal (1.2), the evaluation unit being designed to determine the sound impedance, and the sound source (1) being the engine of the motor vehicle.

2. Device according to Patent Claim 1, **characterized in that** the sound source (1) is designed in such a way that the sound signal (1.1) which can be generated is in the ultrasonic range.

3. Device according to one of Patent Claims 1 to 2, **characterized in that** the sound receiver (2) is a microphone.

4. Device according to one of Patent Claims 1 to 3, **characterized in that** the sound source (1) is arranged on one side of the particle filter (3), and the sound receiver (2) is arranged on the other side of the particle filter (3).

5. Device according to one of Patent Claims 1 to 3, **characterized in that** the sound source (1) and the sound receiver (2) are arranged on one side of the particle filter (3).

6. Device according to one of Patent Claims 1 to 3, **characterized in that** a further sound receiver is provided, and one (2) of the sound receivers is arranged on one side of the particle filter (3) and the other sound receiver is arranged on the other side of the particle filter (3).

7. Device according to one of Patent Claims 1 to 4, **characterized in that** the evaluation unit (4) is designed in such a way that it can evaluate the amplitude of the sound signal (1.2) and/or compare the phase angle of the two sound signals (1.1, 1.2) with one another.

8. Method for determining the state of a particle filter of a motor vehicle, **characterized in that** a sound signal (1.1) is transmitted in the direction of the particle filter (3) by means of a sound source (1), the sound signal (1.2) which is modified by the particle filter (3) being received by means of a sound receiver (2) and the sound impedance being determined by means of an evaluation unit (4) and the state of the particle filter (3) being determined therefrom, the engine of the motor vehicle being used as a sound source.

9. Method according to Patent Claim 8, **characterized in that** the phase and/or the amplitude of the received sound signal (1.2) are evaluated.

10. Method according to Patent Claim 8 or 9, **characterized in that** a sinusoidal or pulse-shaped sound signal is generated by the sound source (1).

11. Method according to one of Patent Claims 8 to 10, **characterized in that** the ambient temperature is determined by reference to the emitted and received sound signals (1.1, 1.2).

## Revendications

1. Dispositif pour déterminer l'état d'un filtre à particules d'un véhicule automobile,
**caractérisé par**
une source sonore (1) pour l'émission d'un signal sonore (1.1) en direction du filtre à particules (3), un récepteur acoustique (2) pour recevoir le signal sonore (1.2) modifié par le filtre à particules (3), et une unité d'exploitation (4) reliée au récepteur acoustique (2) pour évaluer le signal acoustique reçu (1.2), et conçue pour déterminer l'impédance acoustique, et la source sonore (1) étant le moteur du véhicule automobile.

2. Dispositif selon la revendication 1,
**caractérisé en ce que**
la source sonore (1) est réalisée pour émettre le signal sonore (1.1) dans le domaine des ultrasons.

3. Dispositif selon l'une quelconque des revendications 1 à 2,
**caractérisé en ce que**
le récepteur acoustique (2) est un microphone.

4. Dispositif selon l'une quelconque des revendications 1 à 3,
**caractérisé en ce que**
la source sonore (1) est d'un côté du filtre à particules (3) et le récepteur acoustique (2) est de l'autre côté du filtre à particules (3).

5. Dispositif selon l'une quelconque des revendications 1 à 3,
**caractérisé en ce que**
la source sonore (1) et le récepteur acoustique (2) sont du même côté du filtre à particules (3).

6. Dispositif selon l'une quelconque des revendications 1 à 3,
**caractérisé en ce que**
le premier récepteur acoustique (2) est disposé d'un premier côté du filtre à particules (3) et un autre récepteur acoustique est disposé de l'autre côté du filtre à particules (3).

7. Dispositif selon l'une quelconque des revendications 1 à 4,
**caractérisé en ce que**
l'unité d'exploitation (4) peut exploiter l'amplitude du signal sonore (1.2) et/ou comparer entre elles la position de phase des deux signaux sonores (1.1, 1.2).

8. Procédé pour déterminer l'état d'un filtre à particules d'un véhicule automobile,
**caractérisé en ce qu'**
on envoie un signal sonore (1.1) en direction du filtre à particules (3) au moyen d'une source sonore (1), le signal sonore modifié (1.2) par le filtre à particules (3) est reçu par un récepteur acoustique (2), une unité d'exploitation (4) détermine l'impédance acoustique et à partir de celle-ci l'état du filtre à particules (3), et on utilise le moteur du véhicule automobile comme source sonore.

9. Procédé selon la revendication 8,
**caractérisé en ce qu'**
on exploite la phase et/ou l'amplitude du signal sonore reçu (1.2).

10. Procédé selon la revendication 8 ou 9,
**caractérisé en ce que**
la source sonore (1) produit un signal sonore sinusoïdal ou pulsé.

11. Procédé selon l'une quelconque des revendications 8 à 10,
**caractérisé en ce qu'**
on détermine la température ambiante à l'aide du signal sonore émis et du signal sonore reçu (1.1, 1.2).
